# EUROPÄISCHE PATENTSCHRIFT

(11) **EP 2 831 446 B1**
(45) Veröffentlichungstag und Bekanntmachung des Hinweises auf die Patenterteilung: **01.11.2017**
(21) Anmeldenummer: 13711390.8
(22) Anmeldetag: 22.03.2013
(51) Int. Cl.: F16D 55/225, F16D 65/092

(54) **SCHEIBENBREMSE EINES KRAFTFAHRZEUGS UND BREMSBELAG**
DISK BRAKE OF A MOTOR VEHICLE AND BRAKE LINING
FREIN À DISQUE DE VÉHICULE À MOTEUR ET GARNITURE DE FREIN ASSOCIÉE

(30) Priorität: 26.03.2012 DE 102012006107
(43) Veröffentlichungstag der Anmeldung: 04.02.2015
(73) Patentinhaber: KNORR-BREMSE Systeme für Nutzfahrzeuge GmbH, 80809 München (DE)
(72) Erfinder: KLINGNER, Matthias, 82272 Moorenweis (DE); CAMILO-MARTINEZ, José, 82008 Unterhaching (DE); STAAHL, Christian, 81929 München (DE); MILLER, Bernhard, 71263 Weil der Stadt (DE); TRIMPE, Robert, 82234 Weßling (DE)
(86) Internationale Anmeldenummer: PCT/EP2013/056022
(87) Internationale Veröffentlichungsnummer: WO 2013/143990

(56) Entgegenhaltungen:
- DE-A1- 4 317 286
- JP-A- H07 332 405

## Beschreibung

Die vorliegende Erfindung betrifft eine Scheibenbremse eines Kraftfahrzeugs gemäß dem Oberbegriff des Anspruchs 1 sowie einen Bremsbelag gemäß dem Oberbegriff des Anspruchs 8. Gattungsgemäße Scheibenbremsen eines Kraftfahrzeugs, beispielsweise in Gestalt von Schiebesattel-Scheibenbremsen für Nutzfahrzeuge, sind in zahlreichen Ausführungsvarianten aus dem Stand der Technik bekannt.

Bei der Gestaltung der Bremsbeläge solcher Nutzfahrzeug-Scheibenbremsen steht die Größe der Reibfläche des Bremsbelages stets im Vordergrund, um zum einen eine möglichst kleine Flächenpressung und zum zweiten einen möglichst geringen Verschleiß zu erzielen.

Weitere Anforderungen an die Gestaltung solcher Bremsbeläge für insbesondere pneumatische Nutzfahrzeugbremsen bestehen im Erreichen eines möglichst großen Reibradius. Daher weist die Belagfläche des Bremsbelags möglichst die Form eines Kreisausschnitts auf. Außerdem sollte die Auswechslung der Bremsbeläge möglichst ohne Demontage eines die Bremsscheibe rahmenartig übergreifenden Bremssattels möglich sein.

Bei den hier betrachteten gattungsgemäßen Scheibenbremsen, bei denen der oder die Bremsbeläge von einer Drehachse der Bremsscheibe aus betrachtet in radialer Richtung nach außen entnommen werden und entsprechend beim Einbau von radial außen nach innen eingeschoben werden, weist der Belagschacht, in den die Bremsbeläge eingeschoben werden, zur Maximierung der Belagfläche, in der Ebene der Reibfläche der Bremsscheibe betrachtet, die Form eines Rechtecks auf. Außerdem verhindern die Größe und die Rechteckform der Bremsbeläge ein Herausdrehen der Bremsbeläge aus dem Belagschacht infolge der von der Bremsscheibe auf die Beläge wirkenden Querkräfte.

Die Größe der Bremsbeläge ist dabei radial durch den Innen- und Außendurchmesser der Bremsscheibe bestimmt. In tangentialer Richtung wird die Breite des Bremsbelags durch die Breite des Bremssattelrahmens bestimmt. Vergrößert man die Breite des Bremssattelrahmens, führt dies zu einer Steigerung des Gewichts und einer Abnahme der Steifigkeit des Bremssattels. Eine reduzierte Steifigkeit der Bremse geht mit einem erhöhten Hubverbrauch einher, so dass Bremsbeläge aus diesem Grund nicht beliebig breit ausgeführt werden können. Die Breite der Bremsbeläge in tangentialer Richtung wird daher durch den vorhandenen Hub, deren Gewicht sowie durch die angrenzenden Fahrzeugbauteile wie etwa Felge, Achsflansch oder Radlager begrenzt.

Aus der JP H07 332405A sind in tangentialer Richtung zur Bremsscheibe in zwei Teile geteilte Bremsbeläge bekannt, wobei die geteilten Bremsbeläge an kreisbogenförmigen Anlageflächen aneinanderliegen.

Aufgabe der vorliegenden Erfindung ist es, eine Scheibenbremse eines Kraftfahrzeugs sowie einen Bremsbelag für eine solche Scheibenbremse mit einer nochmals vergrößerten Reibbelagfläche ohne die oben genannten Nachteile bereit zu stellen.

Diese Aufgabe wird durch eine Scheibenbremse eines Kraftfahrzeugs mit den Merkmalen des Anspruchs 1 sowie durch einen Bremsbelag mit den Merkmalen des Anspruchs 8 gelöst.

Bei der erfindungsgemäßen Scheibenbremse ist die Breite des radial zur Drehachse der Bremsscheibe äußeren Bereiches des Bremsbelags tangential zur Bremsscheibe größer ist als die Breite einer Belagschachtöffnung des Belagschachtes tangential zur Bremsscheibe, wobei der Bremsbelag der Scheibenbremse aus mehreren zu einem Bremsbelag zusammensetzbaren Bremsbelagteilen ausgebildet ist.

Dadurch wird ermöglicht, dass trotz geringer Breite einer Belagschachtöffnung ein Bremsbelag in dem Belagschacht eingebaut werden kann, dessen tangentiale Breite größer ist als die Breite der Belagschachtöffnung.

Vorteilhafte Ausführungsvarianten der Erfindung sind Gegenstand der Unteransprüche.

Gemäß einer weiteren vorteilhaften Ausgestaltung ist der Bremsbelag der Scheibenbremse zweiteilig in ein einlaufseitiges Bremsbelagteil und ein auslaufseitiges Bremsbelagteil aufgeteilt, wobei die Kontaktfläche des einlaufseitigen Bremsbelagteils zum auslaufseitigen Bremsbelagteil in eine zur Reibfläche des Bremsbelags betrachteten Ebene als Kurve ausgebildet ist, wobei die Kontaktflächen derart geformt sind, dass die beiden Bremsbelagteile im in den Belagschacht eingebauten Zustand gegeneinander verschwenkbar sind, wobei die Kurve der Kontaktfläche des einlaufseitigen Bremsbelagteils konvex oder konkav mit stetig verändertem Krümmungsradius ausgebildet ist, wobei die Kurve der Kontaktfläche des auslaufseitigen Bremsbelagteils entsprechend konkav oder konvex geformt ist. Durch die derartige Aufteilung des Bremsbelags in zumindest zwei Bremsbelagteile können Bremsbeläge über die Belagschachtöffnung ein- und ausgeschwenkt werden, die in zusammengesetzter Form breiter sind als die Breite der Belagschachtöffnung, ohne den Bremssattel dabei demontieren zu müssen. Dadurch ist eine Vergrößerung der Bremsbelagfläche in tangentialer Richtung der Bremsbeläge erreicht, wodurch der Reibradius weiter vergrößert wird. Gemäß einer weiteren bevorzugten Ausgestaltung der Erfindung sind die Bremsbelagteile im zusammengesetzten Zustand durch ein Fixierungselement aneinander liegend fixierbar.

Dabei weist in einer Ausführungsvariante jedes der Bremsbelagteile eine Aussparung auf, die im aneinander liegenden Zustand der Bremsbelagteile eine aneinander übergehende gemeinsame Aussparung bilden, in die das den Aussparungen entsprechend geformte Fixierungselement einlegbar ist, so dass bei eingelegtem Fixierungselement in die Aussparungen in eine Schwenkbewegung der Bremsbelagteile relativ zueinander verhindert ist. Dadurch lassen sich die Bremsbelagteile durch die Belagschachtöffnung in den Belagschacht einlegen und nach dem Einschwenken in die Funktionsstellung mithilfe des in die Aussparungen eingelegten Fixierungselements mühelos in ihrer Funktionsstellung fixieren.

Gemäß einer alternativen Ausführungsvariante weist jedes der Bremsbelagteile eine Aussparung auf, die im zusammengesetzten Zustand der Bremsbelagteile ein an einer den Bremsbelagteilen zugewandten und parallel zur Reibfläche des Bremsbelags ausgerichteten Innenseite des Bremssattels angeordnete, als Bolzen geformtes, Fixierungselement einführbar ist, so dass bei jeweils eingeführtem Fixierungselement in die Aussparungen eine Schwenkbewegung der Bremsbelagteile relativ zueinander verhindert ist.

Nachfolgend werden Ausführungsbeispiele der Erfindung anhand der beiliegenden Zeichnungen näher erläutert.

Es zeigen:
- Figur 1: eine Frontansicht einer ersten Variante einer Scheibenbremse mit zweiteiligem Bremsbelag vor dem Einschwenken in die Funktionsstellung,
- Figur 2: eine Frontansicht der Scheibenbremse aus Figur 1 in der Funktionsstellung und
- Figur 3: eine alternative Ausführungsvariante einer erfindungsgemäßen Scheibenbremse, ebenfalls in einer Frontansicht.
- Figur 4: eine Draufsicht von oben auf die Scheibenbremse aus Figur 1.

In der nachfolgenden Figurenbeschreibung beziehen sich Begriffe wie oben, unten, links, rechts, vorne, hinten usw. ausschließlich auf die in den jeweiligen Figuren gewählte beispielhafte Darstellung und Position der Scheibenbremse, des Bremsbelags, des Bremssattels und dergleichen. Diese Begriffe sind nicht einschränkend zu verstehen, das heißt, durch verschiedene Arbeitsstellungen oder die spiegelsymmetrische Auslegung oder dergleichen können sich diese Bezüge ändern.

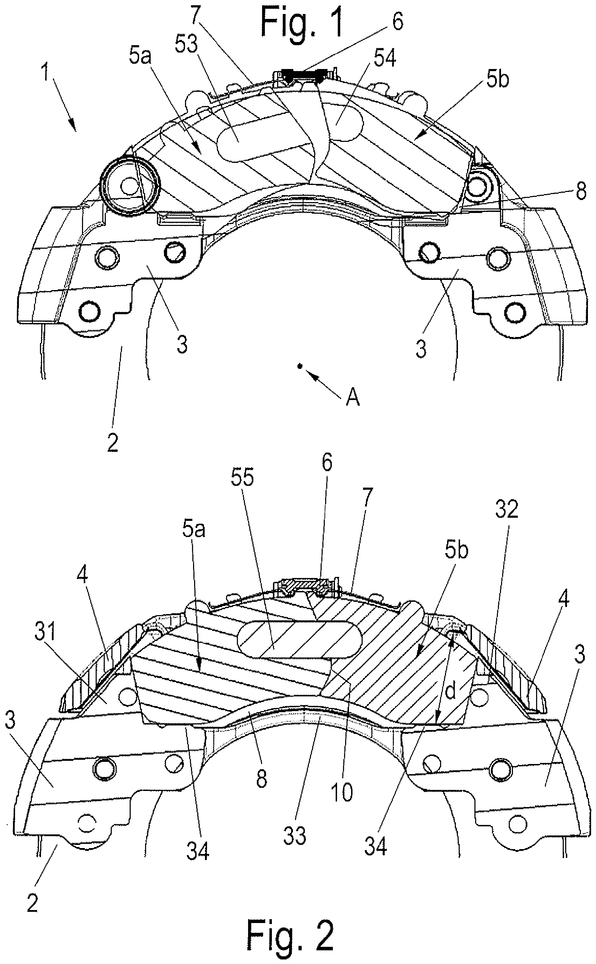

In der Figur 1 ist mit dem Bezugszeichen 1 insgesamt eine erste Ausführungsvariante einer erfindungsgemäßen Scheibenbremse eines Kraftfahrzeugs, insbesondere einer Schiebesattel-Scheibenbremse eines Nutzfahrzeugs bezeichnet. Die Scheibenbremse 1 weist dabei eine Bremsscheibe 2 auf, die sich zusammen mit dem Rad des Kraftfahrzeugs um eine Drehachse A dreht, wenn das Kraftfahrzeug in Bewegung ist. Von, bezogen auf die Drehachse A, radial außen übergreift ein Bremssattel 4 einen Abschnitt der Bremsscheibe 2.

Des Weiteren weist die Scheibenbremse 1 bevorzugt einen fahrzeugseitig ortsfesten Bremsträger 3 auf, der die Bremsscheibe 2 ebenfalls übergreift und der im Wesentlichen aus zwei durch eine Brücke 33 miteinander verbundene Trägerhörner 31, 32 besteht. Die Trägerhörner 31, 32 und das Brückenteil 33 bilden dabei zusammen einen Belagschacht 8 aus, in dem vorzugsweise beidseitig der Bremsscheibe 2 zugeordnete Bremsbeläge 5 positionierbar sind. Denkbar ist auch die Befestigung der Scheibenbremse 1 direkt auf einer Fahrzeugachse.

Im Falle einer Festsattel-Scheibenbremse ist der Belagschacht Teil des fahrzeugseitig ortsfest montierten Bremssattels.

Die Bremsbeläge 5, welche im Wesentlichen aus einer Belagträgerplatte 51 und einem daran befestigten Reibbelag 52 bestehen, werden dabei durch eine von dem Bremssattel 4 gebildete Belagschachtöffnung 81 in dem Belagschacht 8 eingeführt und im Falle eines Belagwechsels über diese Belagschachtöffnung 81 aus dem Belagschacht 8 entnommen.

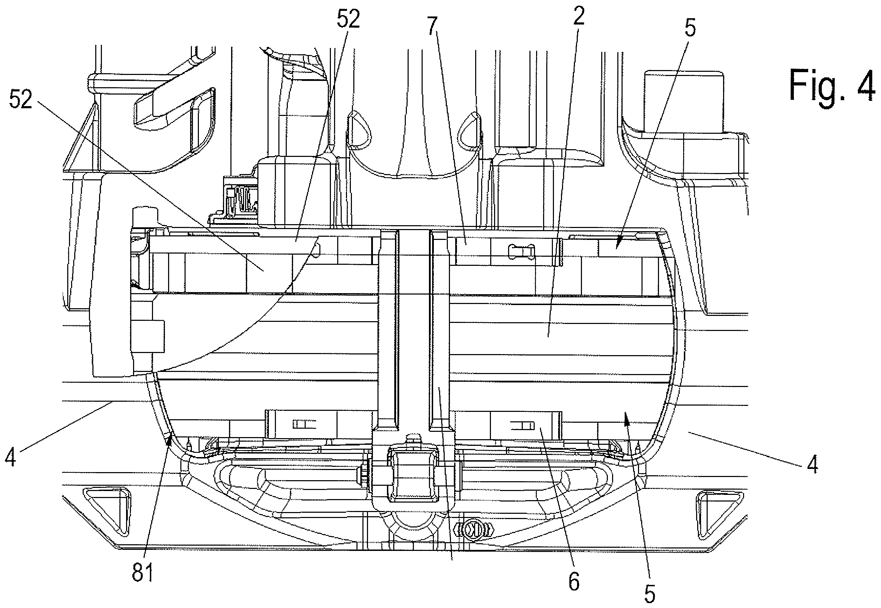

Um die Belagschachtöffnung 81 möglichst klein zu halten, ragt ein Teil des Bremssattels 4, in radialer Richtung ausgehend von der Drehachse A der Bremsscheibe 2 betrachtet, über den Belagschacht 8 hinweg, wie in Figur 4 zu erkennen ist. Entsprechend ist der Innenraum des Belagschachtes 8 so bemessen, dass der Bremsbelag 5 durch eine Einschwenkbewegung um eine zur Drehachse A der Bremsscheibe 2 parallele Schwenkachse in den Belagschacht 8 einführbar ist. Die Breite des radial zur Drehachse A der Bremsscheibe 2 äußeren Bereiches des Bremsbelags 5 tangential zur Bremsscheibe 2 ist dabei größer als die Breite der Belagschachtöffnung 81 des Belagschachtes 8 tangential zur Bremsscheibe 2, um einen möglichst großen Reibradius zu erzielen.

Der Bremsbelag kann gemäß einer (nicht gezeigten ersten) Ausführungsvariante einteilig ausgebildet sein. Dazu ist der Abstand d zwischen einer radial zur Drehachse A der Bremsscheibe 2 im inneren Bereich des Bremsbelags 5 stützenden Stützfläche des Bremsträgers 3 und einem dem Belagschacht 8 nach innen überspannenden Bereich des Bremssattels 4 derart bemessen, dass der Bremsbelag 5 um eine zur Drehachse A der Bremsscheibe 2 parallele Schwenkachse verschwenkbar ist.

Bei der in den Figuren 1 bis 3 gezeigten zweiten Ausführungsvariante der Scheibenbremse 1 besteht der Bremsbelag aus zwei zu dem Bremsbelag zusammensetzbaren Bremsbelagteilen 5a, 5b. Denkbar ist auch eine Zusammensetzung des Bremsbelags 5 aus mehr als zwei Bremsbelagteilen.

Wichtig ist, wie es in den Figuren 1 und 2 gezeigt, bei dem der Bremsbelag 5 zweiteilig in ein einlaufseitiges Bremsbelagteil 5a und ein auslaufseitiges Bremsbelagteil 5b aufgeteilt ausgebildet ist, dass die Komtaktfläche des einlaufseitigen Bremsbelagteils 5a zum auslaufseitigen Bremsbelagteil 5b in einer zur Reibfläche des Bremsbelags 5 betrachteten Ebene als Kurve 10 ausgebildet ist, wobei die Komtaktflächen derart geformt sind, dass die beiden Bremsbelagteile 5a, 5b im Inneren des Belagschachtes 8 im eingebauten Zustand gegeneinander verschwenkbar sind.

Dadurch ist ermöglicht, dass bei Ein- bzw. Ausbau eines Bremsbelags 5 in einen Belagschacht bzw. aus einem Belagschacht heraus beim Einbau zunächst beispielsweise das auslaufseitige Bremsbelagteil 5b in dem Belagschacht eingeführt wird und anschließend das einlaufseitige Bremsbelagteil 5a von radial außen in den Belagschacht 8 eingeführt wird und dabei in einer durch die Kurve 10 vorbestimmte Schwenkbewegung durch die Belagschachtöffnung 81 einführbar ist und nach dem vollständigen Einführen in dem Belagschacht in seine in Figur 2 gezeigte Endposition gebracht werden kann.

Die Kurve 10 der Kontaktfläche des einlaufseitigen Bremsbelagteils 5a ist dabei bevorzugt konvex mit sich stetig veränderndem Krümmungsradius ausgebildet. Entsprechend ist die Kurve der Kontaktfläche des auslaufseitigen Bremsbelagteils 5b konkav mit sich stetig veränderndem Krümmungsradius geformt, derart, dass die beiden Bremsbelagteile 5a, 5b lückenlos zusammenfügbar sind. Eine konkave Krümmung des einlaufseitigen Bremsbelagteils 5a und eine entsprechend konvexe Krümmung des auslaufseitigen Bremsbelagteils 5b ist ebenfalls denkbar.

Zur Fixierung des Bremsbelags 5 in seiner in Figur 2 gezeigten Endposition bzw. Funktionsstellung werden die beiden Bremsbelagteile 5a, 5b im zusammengesetzten Zustand durch ein Fixierungselement 55 mit den beiden kurvig geformten Kontaktflächen aneinander liegend fixiert.

Das in Figur 2 gezeigte Fixierungselement 55 besteht dabei aus einem tangential zur Bremsscheibe 2 ausgerichteten Balken, der in eine Aussparung 53, 54 eingelegt wird, welcher in den jeweiligen Bremsbelagteilen 5a, 5b ausgebildet ist, wobei diese Aussparungen 53, 54 im aneinander liegenden Zustand der Bremsbelagteile 5a, 5b eine ineinander übergehende gemeinsame Aussparung bilden, so dass bei eingelegtem Fixierungselement 55 in die Aussparung 53, 54 eine Schwenkbewegung der Bremsbelagteile 5a, 5b relativ zueinander verhindert ist.

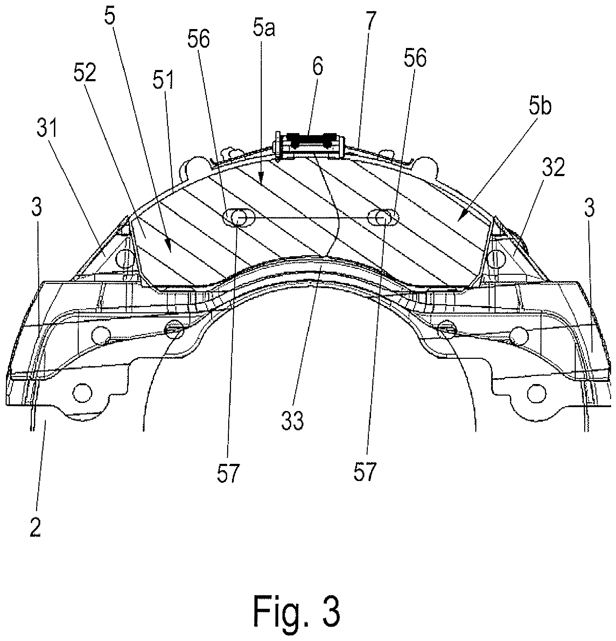

In einer alternativen Ausgestaltungsvariante, gezeigt in Figur 3, weist jedes der Bremsbelagteile 5a, 5b eine Aussparung 56 auf, die im zusammengesetzten Zustand der Bremsbelagteile 5a, 5b ein an einer den Bremsbelagteilen 5a, 5b zugewandten und parallel zur Reibfläche des Bremsbelags 5 ausgerichteten Innenseite des Bremssattels 4 angeordnete, bevorzugt als Bolzen 57 geformte Fixierungselemente 55 einführbar sind, so dass bei jeweils eingeführtem Fixierungselement 55 in die Aussparungen 56 eine Schwenkbewegung der Bremsbelagteile 5a, 5b relativ zueinander ebenfalls wirksam verhindert ist.

Zur weiteren radialen Sicherung der Bremsbeläge 5 in dem Belagschacht 8 sind die Bremsbeläge auf beiden Seiten der Scheibenbremse 2, wie aus dem Stand der Technik bekannt, durch ein am Bremssattel festgelegten Belaghaltebügel 6 fixiert, der vorzugsweise auf eine Belaghaltefeder 7 drückt, die am radial äußeren Rand der Belagträgerplatte 51 der Bremsbeläge 5 fixiert ist.

### Bezugszeichenliste

- 1: Scheibenbremse
- 2: Bremsscheibe
- 3: Bremsträger
- 4: Bremssattel
- 5: Bremsbelag
- 5a: Bremsbelagteil
- 5b: Bremsbelagteil
- 6: Belaghaltebügel
- 7: Belaghaltefeder
- 8: Belagschacht

- 10: Kurve

- 31: Trägerhörner
- 32: Trägerhörner
- 33: Brücke

- 51: Belagträgerplatte
- 52: Reibbelag
- 53: Aussparung
- 54: Aussparung
- 55: Fixierungselement
- 56: Aussparung
- 57: Bolzen

- 81: Belagschachtöffnung

- A: Drehachse

- d: Abstand

## Patentansprüche

1. Scheibenbremse eines Kraftfahrzeugs, insbesondere Schiebesattel-Scheibenbremse eines Nutzfahrzeugs, aufweisend
- einen eine Bremsscheibe (2) übergreifenden Bremssattel (4),
- mindestens einen mit einer Belagträgerplatte (51) und einem daran befestigten Reibbelag versehener Bremsbelag (5), der in einem durch den Bremsträger (3) oder den Bremssattel (4) gebildeten Belagschacht (8) geführt ist,
- wobei der Bremsbelag (5) durch eine von dem Bremssattel (4) gebildete Belagschachtöffnung (81) in den Belagschacht (8) einführbar ist,
**dadurch gekennzeichnet, dass**
- die Breite des radial zur Drehachse (A) der Bremsscheibe (2) äußeren Bereiches des Bremsbelags (5) tangential zur Bremsscheibe (2) größer ist als die Breite einer Belagschachtöffnung (81) des Belagschachtes (8) tangential zur Bremsscheibe (2),
- wobei der Innenraum des Belagschachtes (8) so bemessen ist, dass der Bremsbelag (5) durch eine Einschwenkbewegung um eine zur Drehachse (A) der Bremsscheibe (2) parallele Schwenkachse in den Belagschacht (8) einführbar und
- wobei der Bremsbelag (5) aus mehreren zu dem Bremsbelag (5) zusammensetzbaren Bremsbelagteilen (5a, 5b) ausgebildet ist.

2. Scheibenbremse nach Anspruch 1, **dadurch gekennzeichnet, dass** der Bremsbelag (5) zweiteilig in ein einlaufseitiges Bremsbelagteil (5a) und ein auslaufseitiges Bremsbelagteil (5b) aufgeteilt ausgebildet ist, wobei die Kontaktfläche des einlaufseitigen Bremsbelagteils (5a) und die Kontaktfläche auslaufseitigen Bremsbelagteils (5b) in einer zur Reibfläche des Bremsbelags (5) betrachteten Ebene als Kurve (10) ausgebildet sind, wobei die Kontaktflächen derart geformt sind, dass die beiden Bremsbelagteile (5a, 5b) im in dem Belagschacht (8) eingebauten Zustand gegeneinander verschwenkbar sind.

3. Scheibenbremse nach Anspruch 2, **dadurch gekennzeichnet, dass** die Kurve (10) der Kontaktfläche des einlaufseitigen Bremsbelagteils (5a) konvex bzw. konkav mit sich stetig veränderndem Krümmungsradius ausgebildet ist, wobei die Kurve (10) der Kontaktfläche des auslaufseitigen Bremsbelagteils (5b) entsprechend konkav bzw. konvex geformt ist.

4. Scheibenbremse nach einem der Ansprüche 1 bis 3, **dadurch gekennzeichnet, dass** die Bremsbelagteile (5a, 5b) im zusammengesetzten Zustand durch ein Fixierungselement (55, 57) aneinanderliegend fixierbar sind.

5. Scheibenbremse nach Anspruch 4, **dadurch gekennzeichnet, dass** jedes der Bremsbelagteile (5a, 5b) eine Aussparung (53, 54) aufweist, die im aneinanderliegenden Zustand der Bremsbelagteile (5a, 5b) eine ineinander übergehende gemeinsame Aussparung bilden, in die das den Aussparungen (53, 54) entsprechend geformte Fixierungselement (55) einlegbar ist, so dass bei eingelegtem Fixierungselement (55) in die Aussparungen (53, 54) eine Schwenkbewegung der Bremsbelagteile (5a, 5b) relativ zueinander verhindert ist.

6. Scheibenbremse nach Anspruch 5, **dadurch gekennzeichnet, dass** das Fixierungselement (55) balkenartig ausgebildet ist.

7. Scheibenbremse nach Anspruch 4, **dadurch gekennzeichnet, dass** jedes der Bremsbelagteile (5a, 5b) eine Aussparung (56) aufweist, in die im zusammengesetzten Zustand der Bremsbelagteile (5a, 5b) ein an einer den Bremsbelagteilen (5a, 5b) zugewandten und parallel zur Reibfläche des Bremsbelags (5) ausgerichteten Innenseite des Bremssattels (4) angeordnete als Bolzen (57) geformtes Fixierungselement (55) einführbar ist, so dass bei jeweils eingeführtem Fixierungselement (55) in die Aussparungen (56) eine Schwenkbewegung der Bremsbelagteile (5a, 5b) relativ zueinander verhindert ist.

8. Mehrteiliger Bremsbelag (5) einer Scheibenbremse eines Kraftfahrzeugs, insbesondere einer Schiebesattel-Scheibenbremse eines Nutzfahrzeugs, aufweisend mehrere zu einer Belagträgerplatte (51) zusammensetzbare Belagträgerplattenteile (51a, 51b), wobei zumindest an einem der Belagträgerplattenteile (51a, 51b) mindestens ein Reibbelag befestigt ist, wobei die Kontaktflächen zweier in Funktionsstellung aneinander liegenden Bremsbelagteile (5a, 5b) in einer zur Reibfläche des Bremsbelags (5) betrachteten Ebene als Kurve (10) ausgebildet ist, wobei die kurvig geformten Kontaktflächen derart geformt sind, dass die beiden Bremsbelagteile (5a, 5b) gegeneinander verschwenkbar sind, **dadurch gekennzeichnet, dass** die Kurve (10) der Kontaktfläche des einlaufseitigen Bremsbelagteils (5a) konvex oder konkav mit sich stetig veränderndem Krümmungsradius ausgebildet ist, wobei die Kurve (10) der Kontaktfläche des auslaufseitigen Bremsbelagteils (5b) entsprechend konkav oder konvex geformt ist.

9. Bremsbelag (5) nach Anspruch 8, **dadurch gekennzeichnet, dass** die Bremsbelagteile (5a, 5b) im zusammengesetzten Zustand durch ein Fixierungselement (55, 57) aneinanderliegend fixierbar sind.

10. Bremsbelag (5) nach Anspruch 9, **dadurch gekennzeichnet, dass** jedes der Bremsbelagteile (5a, 5b) eine Aussparung (53, 54) aufweist, die im aneinanderliegenden Zustand der Bremsbelagteile (5a, 5b) eine ineinander übergehende gemeinsame Aussparung bilden, in die das den Aussparungen (53, 54) entsprechend geformte Fixierungselement (55) einlegbar ist, so dass bei eingelegtem Fixierungselement (55) in die Aussparungen (53, 54) eine Schwenkbewegung der Bremsbelagteile (5a, 5b) relativ zueinander verhindert ist.

11. Bremsbelag (5) nach Anspruch 9, **dadurch gekennzeichnet, dass** jedes der Bremsbelagteile (5a, 5b) eine Aussparung (56) aufweist, in die im zusammengesetzten Zustand der Bremsbelagteile (5a, 5b) ein Fixierungselement (55) einführbar ist, so dass bei eingeführtem Fixierungselement (55) in die Aussparungen (56) eine Schwenkbewegung der Bremsbelagteile (5a, 5b) relativ zueinander verhindert ist.

## Claims

1. Disc brake of a motor vehicle, in particular sliding calliper disc brake of a commercial vehicle, comprising
- a brake calliper (4) encompassing a brake disc (2),
- at least one brake pad (5), which is provided with a backing plate (51) and a friction lining secured thereto and which is guided in a pad shaft (8) formed by the adapter (3) or the brake calliper (4),
- wherein the brake pad (5) can be inserted into the pad shaft (8) through a pad shaft opening (81) formed by the brake calliper (4),
**characterised in that**
- the width of the region of the brake pad (5) which is radially outward of the axis of rotation (A) of the brake disc (2) is greater tangentially to the brake disc (2) than the width of a pad shaft opening (81) tangentially to the brake disc (2),
- wherein the interior of the pad shaft (8) is dimensioned such that the brake pad (5) can be inserted into the pad shaft (8) by an inward-pivoting movement about a pivot axis which is parallel to the axis of rotation (A) of the brake disc (2), and
- wherein the brake pad (5) is made of a plurality of brake pad parts (5a, 5b), which can be assembled to form the brake pad (5).

2. Disc brake according to claim 1, **characterised in that** the brake pad (5) is designed in two parts, being divided into an inlet-side brake pad part (5a) and an outlet-side brake pad part (5b), wherein the contact surface of the inlet-side brake pad part (5a) and the contact surface of the outlet-side brake pad part (5b) are designed as a curve (10) in a plane viewed towards the friction surface of the brake pad (5), the contact surfaces being shaped such that the two brake pad parts (5a, 5b) can be pivoted against each other in the pad shaft (8) in the installed state.

3. Disc brake according to claim 2, **characterised in that** the curve (10) of the contact surface of the inlet-side brake pad part (5a) is convex or concave with a continually changing radius of curvature, the curve (10) of the of the contact surface of the outlet-side brake pad part (5b) being correspondingly concave or convex.

4. Disc brake according to any of claims 1 to 3, **characterised in that** the brake pad parts (5a, 5b) can be secured to each other by fixing element (55, 57) in the assembled state.

5. Disc brake according to claim 4, **characterised in that** each of the brake pad parts (5a, 5b) has a recess (53, 54) which, if the brake pad parts (5a, 5b) lie against each other, form a common merging recess into which the fixing element (55) shaped in accordance with the recesses (53, 54) can be inserted, so that, if the fixing element (55) is installed into the recesses (53, 54), a pivoting movement of the brake pad parts (5a, 5b) relative to each other is prevented.

6. Disc brake according to claim 5, **characterised in that** the fixing element (55) is designed to be bar-shaped.

7. Disc brake according to claim 4, **characterised in that** each of the brake pad parts (5a, 5b) has a recess (56) into which, in the assembled state of the brake pad parts (5a, 5b), a fixing element (55) located at an inside of the brake calliper (4) facing the brake pad parts (5a, 5b) and oriented parallel to the friction surface of the brake pad (5) and designed as a bolt (57) can be inserted, so that, if the fixing element (55) is installed into the recesses (56), a pivoting movement of the brake pad parts (5a, 5b) relative to each other is prevented.

8. Multi-part brake pad (5) of a disc brake of a motor vehicle, in particular sliding calliper disc brake of a commercial vehicle, comprising a plurality of backing plate parts (51a, 51b), which can be assembled to form a backing plate (51), wherein at least one friction lining is secured to at least one of the backing plate parts (51a, 51b), wherein the contact surfaces of two brake pad parts (5a, 5b) which lie against each other in the functional position are designed as a curve (10) in a plane viewed towards the friction surface of the brake pad (5), wherein the curved contact surfaces are shaped in such a way that the two brake pad parts (5a, 5b) can be pivoted relative to each other, **characterised in that** the curve (10) of the contact surface of the inlet-side brake pad part (5a) is convex or concave with a continually changing radius of curvature, the curve (10) of the of the contact surface of the outlet-side brake pad part (5b) being correspondingly concave or convex.

9. Brake pad (5) according to claim 8, **characterised in that** the brake pad parts (5a, 5b) can be secured to each other by fixing element (55, 57) in the assembled state.

10. Brake pad (5) according to claim 9, **characterised in that** each of the brake pad parts (5a, 5b) has a recess (53, 54) which, if the brake pad parts (5a, 5b) lie against each other, form a common merging recess into which the fixing element (55) shaped in accordance with the recesses (53, 54) can be installed, so that, if the fixing element (55) is installed into the recesses (53, 54), a pivoting movement of the brake pad parts (5a, 5b) relative to each other is prevented.

11. Brake pad (5) according to claim 9, **characterised in that** each of the brake pad parts (5a, 5b) has a recess (56) into which, in the assembled state of the brake pad parts (5a, 5b), a fixing element (55) can be inserted, so that, if the fixing element (55) is installed into the recesses (56), a pivoting movement of the brake pad parts (5a, 5b) relative to each other is prevented.

## Revendications

1. Frein à disque d'un véhicule automobile, notamment frein à disque à étrier coulissant d'un véhicule utilitaire, comportant
- un étrier (4) de frein, enjambant un disque (2) de frein
- au moins une garniture (5) de frein, qui est pourvue d'une plaque (51) porte-garniture et d'une garniture de friction y étant fixée et qui est guidée dans un puits (8) de garniture formé par le porte-frein (3) ou par l'étrier (4) de frein,
- dans lequel la garniture (5) de frein peut être introduite dans le puits (8) de garniture par une ouverture (81) de puits de garniture formée par l'étrier (4) de frein,
**caractérisé en ce que**
- la largeur de la partie extérieure, radialement par rapport à l'axe (A) de rotation du disque (2) de frein, de la garniture (5) de frein, est, tangentiellement au disque (2) de frein, plus grande que la largeur d'une ouverture (81) du puits (8) de garniture, tangentiellement au disque (2) de frein,
- dans lequel l'espace intérieur du puits (8) de garniture est dimensionné de manière à pouvoir introduire la garniture (5) de frein dans le puits (8) de garniture par un déplacement de pivotement autour d'un axe de pivotement parallèle à l'axe (A) de rotation du disque (2) de frein et
- dans lequel la garniture (5) de frein est constituée de plusieurs parties (5a, 5b) de garniture de frein pouvant être rassemblées en la garniture (5) de frein.

2. Frein à disque suivant la revendication 1, **caractérisé en ce que** la garniture (5) de frein est constituée en étant subdivisée en deux parties, en une partie (5a) de garniture de frein du côté de l'entrée et en une partie (5b) de garniture de frein du côté de la sortie, la surface de contact de la partie (5a) de la garniture de frein du côté de l'entrée et la surface de contact de la partie (5b) de la garniture de frein du côté de la sortie étant constituées sous la forme d'une courbe (10) dans un plan considéré par rapport à la surface de friction de la garniture (5) de frein, les surfaces de contact étant conformées de manière à ce que les deux parties (5a, 5b) de la garniture de frein puissent pivoter l'une par rapport à l'autre dans l'état inséré dans le puits (8) de la garniture.

3. Frein à disque suivant la revendication 2, **caractérisé en ce que** la courbe (10) de la surface de contact de la partie (5a) de la garniture de frein du côté de l'entrée est convexe ou concave, en ayant un rayon de courbure se modifiant constamment, la courbe (10) de surface de contact de la partie (5b) de la garniture de frein du côté de la sortie étant, d'une manière correspondante, concave ou convexe.

4. Frein à disque suivant l'une des revendications 1 à 3, **caractérisé en ce que** les parties (5a, 5b) de la garniture de frein peuvent, à l'état rassemblé, être immobilisées l'une par rapport à l'autre par un élément (55, 57) d'immobilisation.

5. Frein à disque suivant la revendication 4, **caractérisé en ce que** chacune des parties (5a, 5b) de la garniture de frein a un évidement (53, 54), qui, lorsque les parties (5a, 5b) de la garniture de frein sont à l'état l'une à côté de l'autre, forme un évidement commun passant de l'un à l'autre dans lequel l'élément (55) d'immobilisation formé de manière correspondante aux évidements (53, 54) peut être inséré, de manière à ce que, lorsque l'élément (55) d'immobilisation est inséré dans les évidements (53, 54), un mouvement de pivotement des parties (5a, 5b) de la garniture de frein, l'une par rapport à l'autre, soit empêché.

6. Frein à disque suivant la revendication 5, **caractérisé en ce que** l'élément (55) d'immobilisation est constitué en étant de type à barre.

7. Frein à disque suivant la revendication 4, **caractérisé en ce que** chacune des parties (5a, 5b) de la garniture de frein a un évidement (56) dans lequel, lorsque les parties (5a, 5b) de la garniture de frein sont à l'état rassemblé, un élément (55) d'immobilisation, conformé en axe (57), tourné vers l'une des parties (5a, 5b) de la garniture de frein et disposé du côté intérieur de l'étrier (4) de frein, dirigé parallèlement à la surface de friction de la garniture (5) de frein, peut être introduit de manière à empêcher, lorsque l'élément (55) d'immobilisation est inséré dans les évidements (56), un mouvement de pivotement des parties (5a, 5b) de la garniture de frein, l'une par rapport à l'autre.

8. Garniture (5) de frein en plusieurs parties d'un frein à disque d'un véhicule automobile, notamment d'un frein à disque à étrier coulissant d'un véhicule utilitaire, comportant plusieurs parties (51a, 51b) de plaque de porte-garniture pouvant être rassemblées en une plaque (51) porte-garniture, dans laquelle il est fixé au moins une garniture de friction au moins sur l'une des parties (51a, 51b) de plaque de porte-garniture, les surfaces de contact de deux parties (5a, 5b) de garniture de frein, se trouvant l'une à côté de l'autre en position de fonctionnement, étant constituées sous la forme d'une courbe (10) dans un plan considéré par rapport à la surface de friction de la garniture (5) de frein, les surfaces de contact curvilignes étant formées de manière à ce que les deux parties (5a, 5b) de la garniture de frein puissent pivoter l'une par rapport à l'autre, **caractérisée en ce que** la courbe (10) de la surface de contact de la partie (5a) de la garniture de frein du côté de l'entrée est convexe ou concave, en ayant un rayon de courbure se modifiant constamment, la courbe (10) de surface de contact de la partie (5b) de la garniture de frein du côté de la sortie étant, d'une manière correspondante, concave ou convexe.

9. Garniture (5) de frein suivant la revendication 8, **caractérisée en ce que** les parties (5a, 5b) de la garniture de frein peuvent, à l'état rassemblé, être immobilisées l'une par rapport à l'autre par un élément (55, 57) d'immobilisation.

10. Garniture (5) de frein suivant la revendication 8, **caractérisée en ce que** chacune des parties (5a, 5b) de la garniture de frein a un évidement (53, 54), qui, lorsque les parties (5a, 5b) de la garniture de frein sont à l'état l'une à côté de l'autre, forme un évidement commun passant de l'un à l'autre dans lequel l'élément (55) d'immobilisation formé de manière correspondante aux évidements (53, 54) peut être inséré, de manière à empêcher, lorsque l'élément (55) d'immobilisation est inséré dans les évidements (53, 54), un mouvement de pivotement des parties (5a, 5b) de la garniture de frein, l'une par rapport à l'autre.

11. Garniture (5) de frein suivant la revendication 9, **caractérisée en ce que** chacune des parties (5a, 5b) de la garniture de frein a un évidement (56) dans lequel, lorsque les parties (5a, 5b) de la garniture de frein sont à l'état monté, un élément (55) d'immobilisation peut être introduit, de manière à empêcher, lorsque l'élément (55) d'immobilisation est introduit dans les évidements (56), un mouvement de pivotement des parties (5a, 5b) de la garniture de frein, l'une par rapport à l'autre.
